Europäisches Patentamt

European Patent Office

Office européen des brevets

(19)

(11) Numéro de publication: **0 253 716**
**A1**

# (12) DEMANDE DE BREVET EUROPEEN

(21) Numéro de dépôt: **87401576.1**

(22) Date de dépôt: **06.07.87**

(51) Int. Cl.4: **H 05 B 3/08**
**H 05 B 3/14, C 04 B 35/10,**
**H 05 B 3/03**

(30) Priorité: **08.07.86 FR 8610240**

(43) Date de publication de la demande:
**20.01.88 Bulletin 88/03**

(84) Etats contractants désignés: **DE FR GB IT**

(71) Demandeur: **COMMISSARIAT A L'ENERGIE ATOMIQUE**
**31/33, rue de la Fédération**
**F-75015 Paris (FR)**

(72) Inventeur: **Curtila, Robert**
**624, Route de Narbonne**
**F-38950 Saint-Martin-le-Vinoux (FR)**

**Tollens, Daniel**
**129, Le Hameau du Château**
**F-38360 Sassenage (FR)**

(74) Mandataire: **Mongrédien, André et al**
**c/o BREVATOME 25, rue de Ponthieu**
**F-75008 Paris (FR)**

(54) Connexion électrique pour matériau céramique fonctionnant à haute température.

(57) L'invention concerne une connexion électrique fonctionnant à haute température et permettant d'éviter les ruptures par dilatation différentielle de l'élément chauffant ou de l'électrode en céramique.

Elle est constituée d'une amenée de courant rigide (7) solidaire d'un ressort métallique (11). L'ensemble formé par le ressort (11) et l'amenée de courant (7) est scellé dans un trou borgne 3 carotté dans l'une des extrémités d'un barreau (1) en alumine β. Le scellement (19) est réalisé à l'aide d'un ciment en alumine β.

FIG.1

**Description**

CONNEXION ELECTRIQUE POUR MATERIAU CERAMIQUE FONCTIONNANT A HAUTE TEMPERATURE

Les traitements thermîques à température voisine de 2 000°C sont de plus en plus utilisés. Les fours et éléments chauffants doivent être adaptés à ces températures élevées. Il est bien connu que les matériaux utilisés dans la fabrication de tels éléments chauffants sont à base de matériaux réfractaires ou de céramiques, qui à l'aide d'un préchauffage deviennent conducteurs de l'électricité constituant donc après cet amorçage la partie résistive indispensable au chauffage par effet Joule. De tels éléments chauffants sont, par exemple, décrits dans le brevet FR-A-2 307 431 déposé au nom du Commissariat à l'Energie Atomique le 11 avril 1975. De même, dans les techniques d'électrolyse en bain fondu, les matériaux utilisés pour élaborer les électrodes sont à base de corps réfractaires qui deviennent conducteurs au contact du sel fondu dont la température est de l'ordre de 800°C. Cependant, un problème subsiste. A ces températures élevées, les connexions électriques doivent être protégées de toute attaque chimique avec le milieu environnant. Cette protection est assurée de manière habituelle en noyant l'extrémité de l'amenée de courant dans l'élément chauffant ou dans l'électrode à l'aide d'un ciment réfractaire. Toutefois de fréquentes ruptures de l'élément chauffant ou de l'électrode sont constatées au niveau des connexions électriques. Ces ruptures sont provoquées par dilatation différentielle entre les connexions électriques métalliques et le matériau réfractaire constituant l'électrode ou l'élément chauffant.

La présente invention a pour objet un moyen d'éviter les ruptures de l'élément chauffant ou de l'électrode au niveau des connexions électriques. Plus précisément, l'invention a pour objet une connexion électrique pour matériau céramique fonctionnant à haute température, caractérisée en ce qu'elle comporte un ressort conducteur solidaire de la partie rigide de l'amenée de courant, noyés dans un ciment réfractaire.

Selon un premier mode de réalisation, la connexion électrique est fixée à un élément chauffant céramique. Selon ce mode de réalisation la connexion électrique est fixée sur un élément chauffant céramique en alumine β (11 Al₂O₃, NaO) qui permet un amorçage de l'élément chauffant à une température plus basse voisine de 200°C alors que les autres céramiques nécessitent un préchauffage à une température voisine de 1 200°C. Selon un mode de réalisation préférentiel, la connexion électrique est appliquée à un élément chauffant en alumine β muni d'un logement contenant au moins un sel de sodium. La présence de sel de sodium permet de compenser la perte d'ions sodium subie par l'alumine β avec le temps et avec l'augmentation de température. Les propriétés électriques de l'alumine β sont conservées dans la totalité de la masse.

Selon un deuxième mode de réalisation, la connexion électrique est fixée sur une électrode céramique. Selon un mode de réalissation préférentiel, la connexion électrique est fixée sur une électrode en alumine β qui devient conductrice à une température voisine de 200°C, alors que les autres céramiques nécessitent une température voisine de 1 200°C. L'électrode selon l'invention permet d'utiliser des bains de sels fondus dont la température de fusion est plus basse.

De toute façon, l'invention sera mieux comprise à la lecture de la description qui suit, donnée à titre non limitatif.

Sur la figure 1, on a représenté deux connexions électriques appliquées à un élément céramique chauffant.

Sur la figure 2, on a représenté une connexion électrique appliquée à une électrode réfractaire utlisable dans un bain de sel fondu.

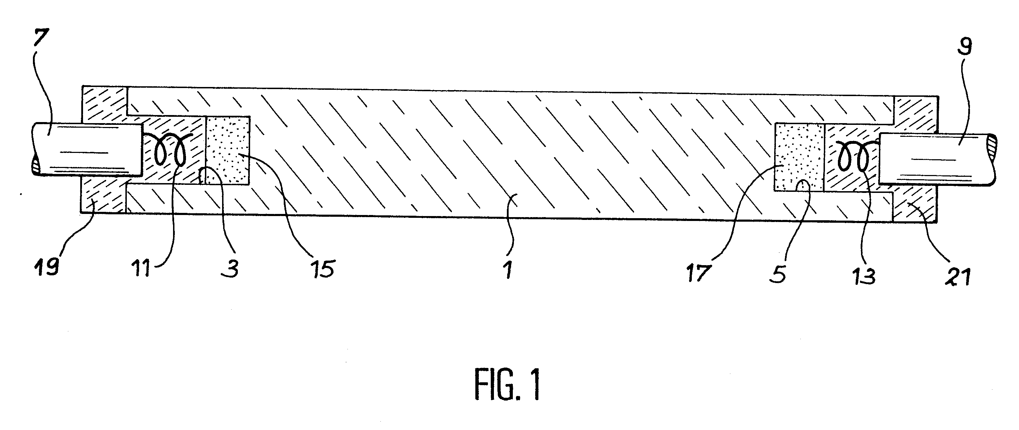

Sur la figure 1, on voit un barreau 1 en alumine β comportant deux trous borgnes 3, 5 carottés en ses extrémités dans son axe longitudinal à l'aide de forets diamantés ainsi que deux amenées de courant 7, 9 munies de deux ressorts métalliques 11, 13.

Les deux ressorts métalliques 11, 13 solidaires de la partie rigide des amenées de courant 7, 9 évitent la rupture de l'élément chauffant à température voisine de 2 000°C par dilatation différentielle. Après remplissage d'au moins un trou borgne 3 et/ou 5 par un sel de sodium (de préférence du carbonate de sodium) pour contituer une réserve 15 et/ou 17, les ensembles formés par les ressorts 11, 13 et les amenées de courant 7, 9 sont maintenus par des scellements 19, 21 en alumine β dans les trous borgnes 3, 5 de telle sorte que les ressorts 11, 13 ne soient pas en contact avec le sel de sodium.

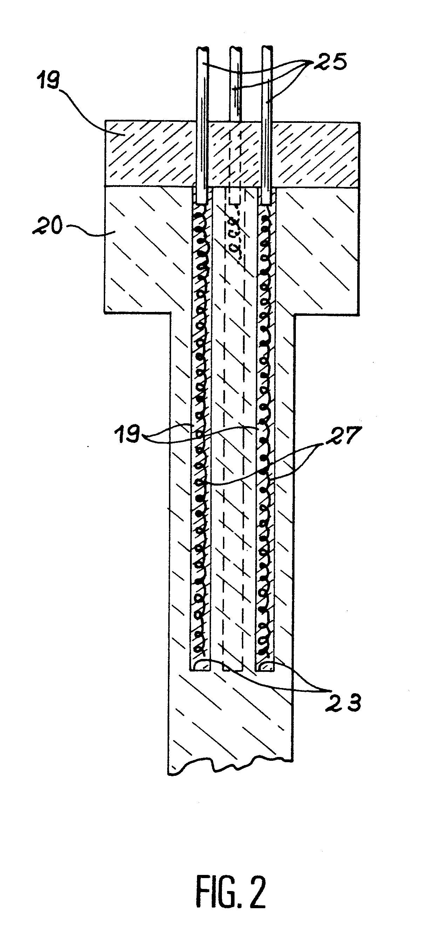

Sur la figure 2, on voit une électrode 20 en alumine β, comportant en son extrémité supérieure trois trous borgnes 23 carottés parallèlement à l'axe de ladite électrode. Dans chacun des trous borgnes 23 se trouve un conducteur rigide 25 muni à son extrémité d'un ressort métallique 27. Chaque ressort 27 solidaire du conducteur rigide 25 évite la rupture par dilatation différentielle de l'électrode à haute température.

Des éléments chauffants en alumine β équipés de connexions électriques objet de l'invention permettent d'obtenir des températures voisines de 2 000°C. A titre d'exemple, on donne les caractéristiques d'un tel élément chauffant :
- longueur : 20 centimètres
- tension d'alimentation : 220 volts
- intensité : 25 ampères
- température de l'élément chauffant : 1 700°C
- durée de vie : supérieure à 20 000 heures.

Il est bien évident qu'on a décrit ci-dessus un exemple utilisant un élément céramique en alumine β, mais l'invention s'applique aussi à tout type d'élément chauffant céramique et à tout type d'électrode céramique.

**Revendications**

1. Connexion électrique pour matériau céramique fonctionnant à haute température, chargée de transmettre un courant électrique entre une amenée de courant comportant une partie rigide et un élément chauffant à haute température, caractérisée en ce qu'elle comporte un ressort conducteur (11, 13, 27) solidaire de la partie rigide (7, 9, 25) de l'amenée de courant, noyé dans un ciment réfractaire (19, 21) à l'intérieur d'une cavité de l'élément chauffant céramique.

2. Connexion électrique selon la revendication 1, caractérisée en ce que l'élément chauffant est en alumine β.

3. Connexion électrique selon la revendication 2, caractérisée en ce qu'un logement (15) est ménagé dans l'élément chauffant (1) et contient au moins un sel de sodium.

4. Connexion électrique selon la revendication 1, caractérisée en ce qu'elle est fixée sur une électrode céramique (20).

5. Connexion électrique selon la revendication 4, caractérisée en ce que l'électrode céramique (20) est en alumine β.

FIG. 1

0253716

FIG. 2

Office européen
des brevets

**RAPPORT DE RECHERCHE EUROPEENNE**

Numero de la demande

EP  87 40 1576

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Ci 4) |
|---|---|---|---|
| A | US-A-2 121 930  (SIEMENS) <br> * Page 2, lignes 16-32 * <br><br> --- | 1 | H 05 B    3/08 <br> H 05 B    3/14 <br> C 04 B   35/10 <br> H 05 B    3/03 |
| A | FR-A-2 299 289  (FORD FRANCE et al.) <br> * Page 6,  ligne  25  -  page 7, ligne 17 * <br><br> --- | 1-3 | |
| A | US-A-4 010 352  (PHILLIPS) <br><br> --- | | |
| A | FR-A-  719 423  (CULMANN) <br><br> --- | | |
| A | FR-A-2 334 260  (PICKFORD HOLLAND) <br><br> ----- | | DOMAINES TECHNIQUES RECHERCHES (Int. Cl.4) <br><br> H 05 B    3/00 <br> C 04 B   35/00 |

Le present rapport de recherche a été établi pour toutes les revendications

| Lieu de la recherche <br> LA HAYE | Date d'achèvement de la recherche <br> 06-10-1987 | Examinateur <br> RAUSCH R.G. |
|---|---|---|